# EUROPEAN PATENT SPECIFICATION

(11) **EP 2 371 152 B1**
(45) Date of publication and mention of the grant of the patent: **04.12.2013**
(21) Application number: 08879296.5
(22) Date of filing: 31.12.2008
(51) Int. Cl.: H04W 4/22

(54) **EMERGENCY CALL SUPPORT DURING ROAMING**
NOTRUFUNTERSTÜTZUNG WÄHREND DES ROAMENS
PRISE EN CHARGE D'APPELS D'URGENCE PENDANT L'ITINÉRANCE

(43) Date of publication of application: 05.10.2011
(73) Proprietor: Telefonaktiebolaget LM Ericsson (publ), 164 83 Stockholm (SE)
(72) Inventor: RAMLE, Peter, SE-435 31 Mölnlycke (SE); OLSSON, Lasse, SE-444 91 Stenungsund (SE)
(74) Representative: Vejgaard, Christian
(86) International application number: PCT/SE2008/000754
(87) International publication number: WO 2010/077190

(56) References cited:
- EP-A1- 1 646 189
- WO-A2-2005/046258
- WO-A2-2005/046258
- US-A1- 2006 094 397
- US-A1- 2006 094 397
- "3rd Generation Partnership Project; Technical Specification Group Services and System Aspects; Support for IMS Emergency Calls over GPRS and EPS; (Release 9)", 3GPP STANDARD; 3GPP TR 23.869, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.0, 1 November 2008 (2008-11-01), pages 1-40, XP050364025,
- "3rd Generation Partnership Project; Technical Specification Group Services and System Aspects; IP Multimedia Subsystem (IMS) emergency sessions (Release 7)", 3GPP STANDARD; 3GPP TS 23.167, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.3.1, 1 February 2006 (2006-02-01), pages 1-27, XP050362916,
- 'Update of ambiguous references, straight quotes, and other small changes' 3GPP TSG SA WG2 MEETING #69, S2-087549, [Online] 12 November 2008, MIAMI, FLORIDA, XP050331995 Retrieved from the Internet: <URL:http://ftp.3gpp.org/ftp/tsg_sa/WG2_ Arch/TSGS2_ 69_ Miami/Docs/S2-087549.zip>
- NORTEL ET AL.: 'IP Multimedia Subsystem (IMS) emergency sessions(Release 7)' 3GPP DRAFT; 23167-131_REVISION MARKS, [Online] 23 February 2006, SOPHIA-ANTIPOLIS CEDEX ; FRANCE, XP050362916 Retrieved from the Internet: <URL:http://www.3gpp.org/ftp/Specs/archive/ 23_series/23.167/23167-131.zip>

## Description

### TECHNICAL FIELD

The present invention concerns a method and arrangement for handling prioritised calls in general and emergency calls in particular in a communications network.

### BACKGROUND

The PDP (Packet Data Protocol, e.g. IP, X.25, FrameRelay) context is a data structure present on both the SGSN (Serving GPRS Support Node) and the GGSN (Gateway GPRS Support Node), which contains the subscriber's session information when the subscriber has an active session. When a mobile wants to use GPRS, it must first attach and then activate a PDP context. This allocates a PDP context data structure in the SGSN that the subscriber is currently visiting and the GGSN serving the subscribers access point. The data recorded includes:
- Subscriber's IP address
- Subscriber's IMSI
- Subscriber's
   ○ Tunnel Endpoint ID (TEID) at the GGSN
   ○ Tunnel Endpoint ID (TEID) at the SGSN

TEID is a number allocated by the NW Nodes which identifies end point for data transmission in each node, MME, SGSN etc. related to a particular PDP context.

There are two kinds of PDP contexts.
• Primary PDP Context
   ○ Has a unique IP address associated with it
• Secondary PDP Context
   ○ Shares an IP address with another primary PDP context
   ○ Is created based on an existing primary PDP context (to share the IP address)
   ○ Secondary PDP contexts may have different Quality Of Service settings
   ○ Similar for EPS Bearers

To take full advantage of broadband access networks and to enable the co-existence of multiple technologies through an efficient, all-packet architecture, 3GPP^{™} is developing a new core network, the evolved packet core (EPC). EPC is planned for 3GPP Release 8 and is intended for use by various access networks such as LTE, HSPA/HSPA+ and non-3GPP networks. The evolved packet system (EPS) comprises the EPC and a set of access systems such as the eUTRAN (Evolved Universal Terrestrial Radio Access Network) or UTRAN. EPS represents a migration from the traditional hierarchical system architecture to a flattened architecture that minimizes the number of hops and distributes the processing load across the network.

In EPS, QoS flows called EPS bearers are established between the UE and the P-GW. Each EPS bearer is associated with a QoS profile, and is composed of a radio bearer and a mobility tunnel. Thus, each QoS IP flow (e.g., VoIP) will be associated with a different EPS bearer, and the network can prioritize packets accordingly.

The subcomponents of the EPC are:
- MME (Mobility Management Entity): The MME is the key control-node for the LTE access-network. It is responsible for idle mode UE tracking and paging procedure including retransmissions. It is involved in the bearer activation/deactivation process and is also responsible for choosing the SGW for a UE at the initial attach and at time of intra-LTE handover involving Core Network (CN) node relocation. It is responsible for authenticating the user (by interacting with the HSS). The Non-Access Stratum (NAS) signaling terminates at the MME and it is also responsible for generation and allocation of temporary identities to UEs. It checks the authorization of the UE to camp on the service provider's Public Land Mobile Network (PLMN) and enforces UE roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming UEs.
- S-GW (Serving Gateway): The SGW routes and forwards user data packets, while also acting as the mobility anchor for the user plane during inter-eNB handovers and as the anchor for mobility between LTE and other 3GPP technologies (terminating S4 interface and relaying the traffic between 2G/3G systems and PDN GW). For idle state UEs, the SGW terminates the DL data path and triggers paging when DL data arrives for the UE. It manages and stores UE contexts, e.g. parameters of the IP bearer service, network internal routing information. It also performs replication of the user traffic in case of lawful interception.
- P-GW (PDN gateway): The PDN GW provides connectivity to the UE to external packet data networks by being the point of exit and entry of traffic for the UE. A UE may have simultaneous connectivity with more than one PDN GW for accessing multiple PDNs. The PDN GW performs policy enforcement, packet filtering for each user, charging support, lawful Interception and packet screening. Another key role of the PDN GW is to act as the anchor for mobility between 3GPP and non-3GPP technologies such as WiMAX and 3GPP2 (CDMA 1X and EvDO).

The mobile stations or cell phones are frequently used to put emergency calls. After establishment of an emergency call it is crucial to keep the connection even for roaming scenarios and for example, in congestion situations emergency calls shall have priority over other type of calls. To make this possible an emergency indication will be included at attach and the PDP Context/EPS bearer activation will be towards an especially dedicated Em-APN (Emergency Access Point Name).

Thus, both the MME and PDP/EPS Bearer Contexts will have a parameter indicating emergency call.

In a roaming scenario during an ongoing emergency call and when entering a new SGSN/MME (Mobility Management Entity) by use of the RAU/TAU (Routeing Area Update/Tracking Area Update) procedure, the new SGSN/MME needs to know that this is an emergency call in order to prioritize correctly. Currently there is no indication of emergency call in the RAU/TAU procedure.

Furthermore, it will only be possible for the new SGSN/MME to determine that this is an emergency call if the new SGSN/MME is able to fetch the User Equipment's (UE) contexts from the old SGSN/MME. If it is not possible to fetch the contexts, then the RAU/TAU procedure will be rejected and the UE will have to re-attach. To be able to retrieve the needed data a roaming agreement is needed between the operators, for many inter PLMN roaming scenarios this is not the case.

Publication "Update of ambiguous references, straight quotes, and other small changes", 3GPP Draft, S2-087549; 3rd Generation Partnership Project (3GPP), Huawei, Miami; 2008-11-12, includes description of setting up an emergency call by the UE. Although, some section indicates that the document also relate to handover and roaming as well, it is not explicitly disclosed any specific solutions to the roaming scenario.

Publication "IP Mulfimedia Subsystem (IMS) emergency Session (Release 7)"; 3GPP Draft; 23167-131_revision _marks, 20060223, Sophia-Antipolis Cedex; France Nortel, Rogers Wireless, Huawei relates to open issues on GPRS specific aspects and specially conveying emergency indication in RAU procedures when roaming.

Document 3GPP TR 23.869, 3rd Generation Partnership Project; Technical Specification Group Services and System Aspects; Support for IMS Emergency Calls over GPRS and EPS; (Release 9), relates to a single source for documenting the GPRS and EPS enhancements to support emergency calls.

### SUMMARY

An object of the present invention is to provide a method and arrangement to enhance emergency call handling from a user equipment when roaming by retaining connection.

Other advantages of the invention include:
- By using an emergency indicator both at RAN and NAS level, it will be possible for the new RAN Node and the new SGSN/MME to prioritize (e.g. in a congestion situation in the RAN or CN) the emergency call before getting the emergency
- indication from the old SGSN/MME.
- Faster emergency call attach at Inter SGSN/MME roaming where the MM and PDP/EPS Bearer Contexts can't be fetched from old SGSN/MME.

This object is solved by the subject-matter of the independent claims.

Advantageous embodiments are subject to the dependent claims.

### BRIEF DESCRIPTION OF THE DRAWINGS

The present invention will hereinafter be further explained by means of non-limiting examples with reference to the appended figures where;
- Fig. 1: shows a schematic communication network according to the present invention,
- Fig. 2: is a signal flow diagram according to a first embodiment of the invention,
- Fig. 3: is a signal flow diagram according to a second embodiment of the invention,
- Fig. 4: is a flow diagram illustrating the general method steps of the invention,
- Fig. 5: is a block diagram of User Equipment of the invention,
- Fig. 6: is a block diagram of Base Station of the invention, and
- Fig. 7: shows another schematic communication network according to the present invention.

It should be noted that the drawings have not been drawn to scale and that the dimensions of certain features have been exaggerated for the sake of clarity.

### DETAILED DESCRIPTION

In the following the invention is described with reference to emergency calls as an example. However, the invention may likewise be applied to handling any prioritised calls during roaming in a wireless communications network.

Generally, the invention relates to handling emergency calls especially within the RAU/TAU procedure, by providing the new SGSN/MME with enough information making it possible to realize that this is an emergency call and to retain the UE, thus only requiring re-activation of the PDP Contexts/EPS bearers for the case when the contexts can't be fetched from the old SGSN/MME.

As an alternative it is proposed that the UE, during emergency call, instead of performing RAU/TAU always performs Attach (but still retaining the PDP Contexts in the MS), and that the SGSN/MME is capable of transforming the Attach into a RAU/TAU procedure for the case when the contexts can be fetched from the old SGSN/MME.

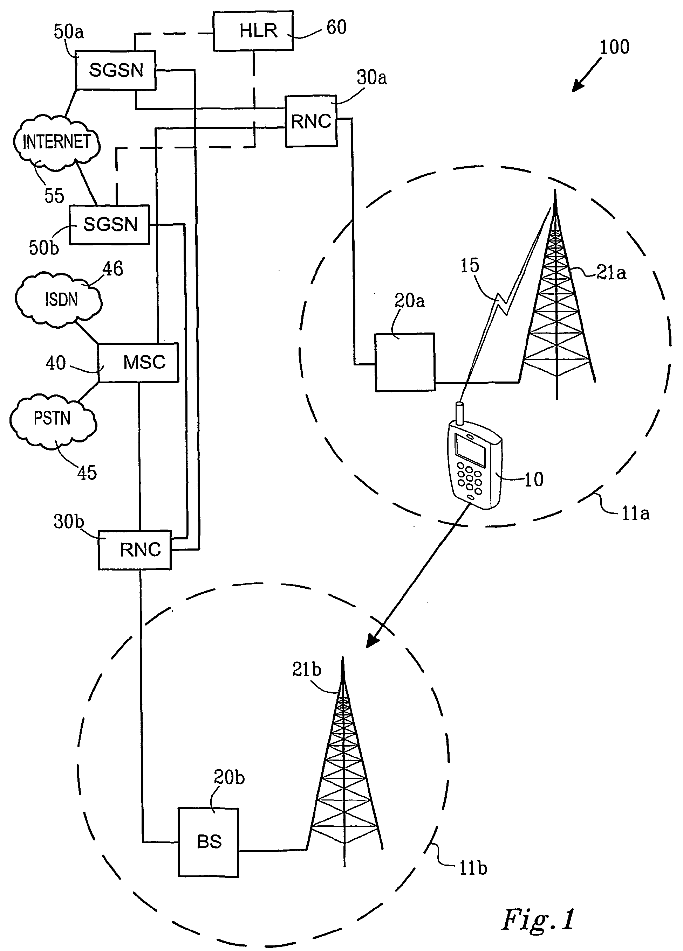

Fig. 1 shows a simplified and general block diagram of a mobile communication system 100 according to one general embodiment of the invention. In the systems 100, a user equipment (UE) 10, sometimes referred to as a mobile station (MS), communicates over-the-air with at least two base stations (BS) 20a and 20b, sometimes called a base transceiver station (BTS). UE 10 is camped on BS 20a as indicated by signal 15. There may be other base stations in varying degrees of proximity to UE 10. A radio network controller (RNC) 30a, 30b, sometimes called a base station controller (BSC), manages one or more base stations. In this simplified diagram, RNC 30a manages BS 20a and RNC 30b manages BS 20b. The radio network controllers and their associated base stations make up a radio access network (RAN). 11 a and 11 b designate coverage areas of BS antennas 21 a and 21 b, respectively.

The RAN is connected to at least one telecommunications core network through control nodes. There are different control nodes depending on whether the communication connection is circuit-switched or packet-switched. A mobile switching centre (MSC) 40 connects to circuit-switched networks such as a public switched telephone network (PSTN) 45 and an integrated services digital network (ISDN) 46. A Serving GPRS Support Node (SGSN) 50a and 50b connects to packet-switched networks such as the Internet 55. The SGSN is connected to Home Location Register (HLR) 60, comprising subscription information and routing information.

At a conceptual level, the coverage areas 11a and 11 b of BS 20a and BS 20b (including other BSs not shown) is grouped to form a routing area (RA) for packet-switched connections. A service operator may determine routing areas and, in general, a single routing area has multiple cells; however, we have simplified this diagram with the result that the routing areas are unusually small. In general, a service operator may group multiple cells into a single location area; however, the illustrated diagram is simplified with the result that the location areas are unusually small. Typically, a location area is larger than a routing area. In this specification, the terms "routing area" or "location area" are generically referred to as "steering area."

If the serving cell of the UE 10 changes, it may need to update both its routing area and its location area.

A normal, non-emergency call starts with a call placement. If the call is not an emergency call the UE 10 sends to its serving BS 20a a radio resource control (RRC) connection request with "originating conversational call" as an establishment cause. If it is determined that the UE 10 received a network acknowledgement, such as an RRC Connection Setup message, the UE can complete the RRC connection setup, which includes sending an RRC Connection Setup Complete message to the network. Recalling that the call is not an emergency call, the UE 10 sends a connection management (CM) service request with "mobile originating call establishment" as the CM service type. At this point, the call placement process ends, and the circuit-switched connection is complete. Still in a non-emergency call scenario, the network may not send an RRC Connection Setup message. Instead, the network may send an RRC Connection Reject. The rejection message may contain instructions to redirect the UE to a different carrier frequency or another radio access technology.

In case it is determined that an emergency call is established, as mentioned above, within the RAU procedure, the new SGSN 50b will be provided with sufficient information making it possible to realize that an emergency call is established and the UE 10 will retain, thus only requiring re-activation of the PDP Contexts for the case when the contexts can not be fetched from the old SGSN.

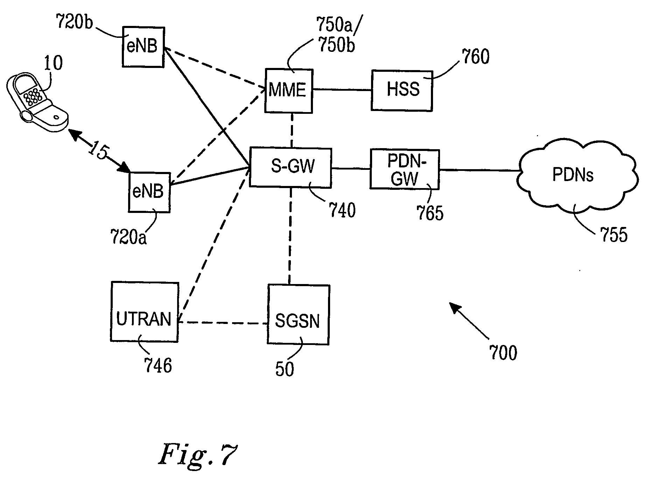

Fig. 7 shows an exemplary corresponding network architecture 700 for EPS. In the systems 700, the user equipment (UE) 10 communicates over-the-air with at least two base stations (eNB) 720a and 720b. Also in this case UE 10 is camped on eNB 20a as indicated by signal 15. There may be other base stations in varying degrees of proximity to UE 10.

Most of the typical protocols implemented in RNCs 30a, 30b may be moved to the eNBs 20a and 20b. The eNB, has also similar to the Node B functionality in the evolved HSPA architecture. On the control plane, functions such as admission control and radio resource management are also incorporated into the eNB.

Between the access network and the packet data networks (PDNs) 755, gateways support the interfaces, the mobility needs and the differentiation of QoS flows. The network also comprises two logical gateway entities, the Serving Gateway (S-GW) 740 and the Packet Data Gateway (PDN-GW) 765. The S-GW acts as a local mobility anchor, forwarding and receiving packets to and from the eNB where the UE is being served. The PDN-GW, in turn, interfaces with the external PDNs 755, such as the Internet and IMS. It is also responsible for several IP functions, such as address allocation, policy enforcement, packet classification and routing, and it provides mobility anchoring for non-3GPP access networks. In practice, both gateways can be implemented as one physical network element, depending on deployment scenarios and vendor support.

The Mobility Management Entity (MME) 750a/750b is a signaling-only entity, thus user IP packets do not go through the MME. Its main function is to manage the UE's mobility. In addition, the MME also performs authentication and authorization (through Home Subscriber Server (HSS) 780); idle-mode UE tracking and reachability; security negotiations; and network architecture specific signaling.

An important aspect for any all-packet network is a mechanism to guarantee differentiation of packet flows based on its QoS requirements. Applications such as video streaming, HTTP, or video telephony have special QoS needs, and should receive differentiated service over the network. With EPS, QoS flows called EPS bearers are established between the UE and the P-GW. Each EPS bearer is associated with a QoS profile, and is composed of a radio bearer and a mobility tunnel. Thus, each QoS IP flow (e.g., VoIP) will be associated with a different EPS bearer, and the network can prioritize packets accordingly.

In case the Network determines that an emergency call is established, as mentioned above, within the TAU procedure, the new MME 750b will be provided with sufficient information making it possible to realize that an emergency call is established and the UE 10 will retain, thus only requiring re-activation of the EPS bearers for the case when the contexts can not be fetched from the old MME 750a.

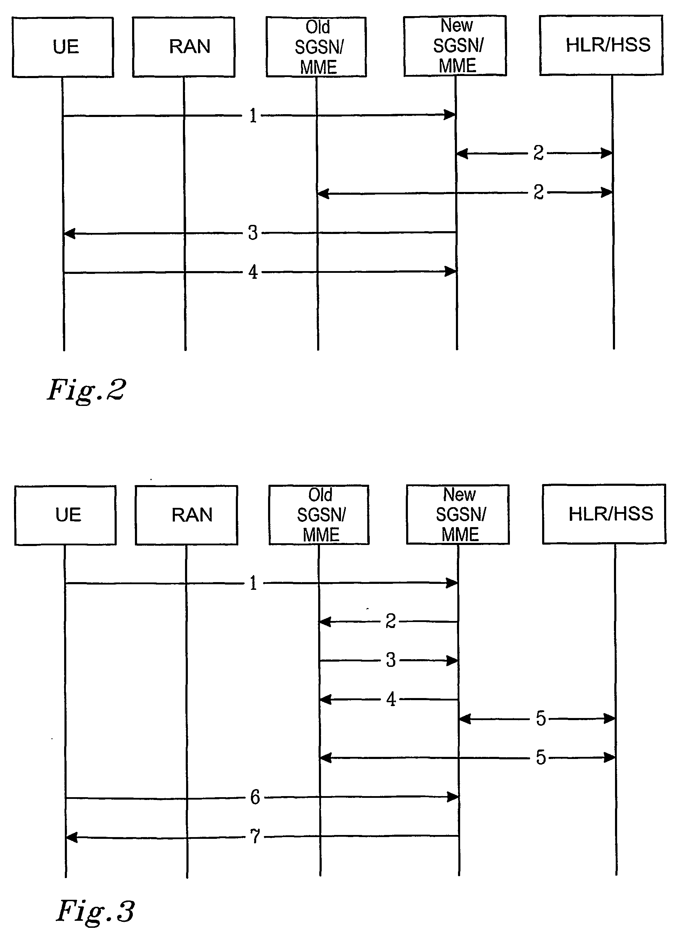

Fig. 2 shows the Inter SGSN Routing Area procedure according to a first embodiment of the invention (described in conjunction with Figs. 1 and 7). The paragraph numbering relates to the numbered arrows:
1. The UE 10 sends a Routeing Area Update Request including an Emergency Indication. This indication is also included in the RAN-level signalling.
2. The SGSN/MME 50b/750b informs the HLR/HSS 60/760 of the change of SGSN/MME via the Update Location procedure and the HLR/HSS performs the Cancel Location procedure towards the old SGSN/MME 50a/750a.
3. The new SGSN 50b/750b responds to the UE 10 with Routeing Area Update Accept including e.g. Update result set to the new value "Emergency attach".
4. The UE acknowledges the new P-TMSI by returning a Routeing Area Update Complete message.

An alternative Attach Request procedure for SGSN/MME is illustrated in Fig. 3:
1. The UE 10 sends an Attach Request including an Emergency Indication and possibly PDP Context/EPS bearer status and MBMS Context status. The Emergency indication is also included in the RAN-level signalling.
2. The new SGSN/MME sends Context Request to the old SGSN/MME.
3. The old SGSN/MME 50a/750a responds with Context Response with the MM and PDP contexts/EPS bearers including an emergency indication.
4. The new SGSN/MME 50b/750b acknowledges the Context Response by sending a Context Acknowledge message to the old SGSN/MME 50a/750a.
5. The SGSN/MME 50b/750b informs the HLR/HSS 60/760 of the change of SGSN/MME via the Update Location procedure and the HLR/HSS performs the Cancel Location procedure towards the old SGSN/MME.
6. The new SGSN/MME 50b/750b responds to the UE with Attach Accept including e.g. Attach result set to the new value "Emergency RAU", and possibly PDP Context status, List of Receive N-PDU Numbers and MBMS Context status.
7. The UE acknowledges the new P-TMSI by returning an Attach Complete message.

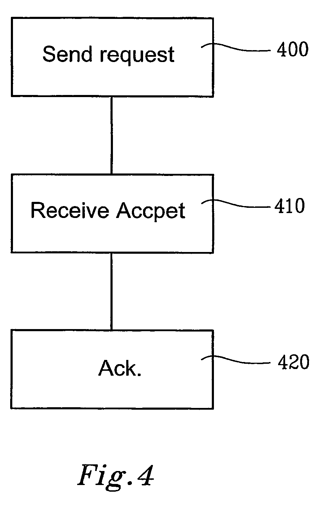

Thus, the method of the invention as illustrated in Fig. 4 comprises the steps of:
- receiving (400) a roaming request message comprising an indication of emergency,
- transmitting (410) by the new BS an acceptance signal of roaming, which acceptance signal comprises data for an emergency call attachment, and
- receiving (420) acknowledgment signal comprising roaming completed message.

Following tables 1-4 illustrate extracts from 3GPP TS 24.008 v8.2.0 describing the Attach and RAU Request messages as well as the corresponding Accept messages. It should be emphasized that these are given merely as examples for 3GPP v8, and do not limit the invention.

**Table 1 (corresponding to 9.4.1/3GPP TS 24.008): ATTACH REQUEST message content**

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 10.2 | | | |
| | Skip indicator | Skip indicator | M | V | ½ |
| | | 10.3.1 | | | |
| | Attach request message identity | Message type | M | V | 1 |
| | | 10.4 | | | |
| | MS network capability | MS network capability | M | LV | 3-9 |
| | | 10.5.5.12 | | | |
| | Attach type | Attach type | M | V | ½ |
| | | 10.5.5.2 | | | |
| | GPRS ciphering key sequence | Ciphering key sequence number | M | V | ½ |
| | number | 10.5.1.2 | | | |
| | DRX parameter | DRX parameter | M | V | 2 |
| | | 10.5.5.6 | | | |
| | P-TMSI or IMSI | Mobile identity | M | LV | 6- 9 |
| | | 10.5.1.4 | | | |
| | Old routing area identification | Routing area identification | M | V | 6 |
| | | 10.5.5.15 | | | |
| | MS Radio Access capability | MS Radio Access capability | M | LV | 6-52 |
| | | 10.5.5.12a | | | |
| 19 | Old P-TMSI signature | P-TMSI signature | O | TV | 4 |
| | | 10.5.5.8 | | | |
| 17 | Requested READY timer | GPRS Timer | O | TV | 2 |
| | value | 10.5.7.3 | | | |
| 9- | TMSI status | TMSI status | O | TV | 1 |
| | | 10.5.5.4 | | | |
| 33 | PS LCS Capability | PS LCS Capability | O | TLV | 3 |
| | | 10.5.5.22 | | | |

In accordance with one example of the invention, parameter "PS LCS Capability" is added.

**Table 2 (corresponding to 9.4.2/3GPP TS 24.008): ATTACH ACCEPT message content**

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 10.2 | | | |
| | Skip indicator | Skip indicator | M | V | 1/2 |
| | | 10.3.1 | | | |
| | Attach accept message identity | Message type | M | V | 1 |
| | | 10.4 | | | |
| | Attach result | Attach result | M | V | 1/2 |
| | | 10.5.5.1 | | | |
| | Force to standby | Force to standby | M | V | 1/2 |
| | | 10.5.5.7 | | | |
| | Periodic RA update timer | GPRS Timer | M | V | 1 |
| | | 10.5.7.3 | | | |
| | Radio priority for SMS | Radio priority | M | V | 1/2 |
| | | 10.5.7.2 | | | |
| | Radio priority for TOM8 | Radio priority 2 | M | V | 1/2 |
| | | 10.5.7.5 | | | |
| | Routing area identification | Routing area identification | M | V | 6 |
| | | 10.5.5.15 | | | |
| 19 | P-TMSI signature | P-TMSI signature | O | TV | 4 |
| | | 10.5.5.8 | | | |
| 17 | Negotiated READY timer value | GPRS Timer | O | TV | 2 |
| | | 10.5.7.3 | | | |
| 18 | Allocated P-TMSI | Mobile identity | O | TLV | 7 |
| | | 10.5.1.4 | | | |
| 23 | MS identity | Mobile identity | O | TLV | 7-10 |
| | | 10.5.1.4 | | | |
| 25 | GMM cause | GMM cause | O | TV | 2 |
| | | 10.5.5.14 | | | |
| 2A | T3302 value | GPRS Timer 2 | O | TLV | 3 |
| | | 10.5.7.4 | | | |
| 8C | Cell Notification | Cell Notification | O | T | 1 |
| | | 10.5.5.21 | | | |
| 4A | Equivalent PLMNs | PLMN List | O | TLV | 5-47 |
| | | 10.5.1.13 | | | |
| B- | Network feature support | Network feature support | O | TV | 1 |
| | | 10.5.5.23 | | | |
| 34 | Emergency Number List | Emergency Number List | O | TLV | 5-50 |
| | | 10.5.3.13 | | | |
| A- | Requested MS Information | Requested MS Information | O | TV | 1 |
| | | 10.5.5.25 | | | |
| 37 | T3319 value | GPRS Timer 2 | O | TLV | 3 |
| | | 10.5.7.4 | | | |

In accordance with one example of the invention, parameters "Network feature support", "Emergency Number List", "MBMS context status", "Requested MS Information", and "T3319 value" are added.

**Table 3 (corresponding to 9.4.14/3GPP TS 24.008): ROUTING AREA UPDATE REQUEST message content**

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 10.2 | | | |
| | Skip indicator | Skip indicator | M | V | 1/2 |
| | | 10.3.1 | | | |
| | Routing area update request message identity | Message type | M | V | 1 |
| | | 10.4 | | | |
| | Update type | Update type | M | V | 1/2 |
| | | 10.5.5.18 | | | |
| | GPRS ciphering key sequence number | Ciphering key sequence number | M | V | 1/2 |
| | | 10.5.1.2 | | | |
| | Old routing area identification | Routing area identification | M | V | 6 |
| | | 10.5.5.15 | | | |
| | MS Radio Access capability | MS Radio Access capability | M | LV | 6-52 |
| | | 10.5.5.12a | | | |
| 19 | Old P-TMSt signature | P-TMSI signature | O | TV | 4 |
| | | 10.5.5.8 | | | |
| 17 | Requested READY timer value | GPRS Timer | O | TV | 2 |
| | | 10.5.7.3 | | | |
| 27 | DRX parameter | DRX parameter | O | TV | 3 |
| | | 10.5.5.6 | | | |
| 9- | TMSI status | TMSI status | O | TV | 1 |
| | | 10.5.5.4 | | | |
| 18 | P-TMSI | Mobile identity | O | TLV | 7 |
| | | 10.5.1.4 | | | |
| 31 | MS network capability | MS network capability | O | TLV | 4-10 |
| | | 10.5.5.12 | | | |
| 32 | PDP context status | PDP context status | O | TLV | 4 |
| | | 10.5.7.1 | | | |
| 33 | PS LCS Capability | PS LCS Capability | O | TLV | 3 |
| | | 10.5.5.22 | | | |
| 35 | MBMS context status | MBMS context status | O | TLV | 2-18 |
| | | 10.5.7.6 | | | |

In accordance with one example of the invention, parameters "PS LCS Capability", and "MBMS context status" are added.

**Table 4 (corresponding to 9.4.15/3GPP TS 24.008): ROUTING AREA UPDATE ACCEPT message content**

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 10.2 | | | |
| | Skip indicator | Skip indicator | M | V | 1/2 |
| | | 10.3.1 | | | |
| | Routing area update accept message identity | Message type | M | V | 1 |
| | | 10.4 | | | |
| | Force to standby | Force to standby | M | V | 1/2 |
| | | 10.5.5.7 | | | |
| | Update result | Update result | M | V | 1/2 |
| | | 10.5.5.17 | | | |
| | Periodic RA update timer | GPRS Timer | M | V | 1 |
| | | 10.5.7.3 | | | |
| | Routing area identification | Routing area identification | M | V | 6 |
| | | 10.5.5.15 | | | |
| 19 | P-TMSI signature | P-TMSI signature | O | TV | 4 |
| | | 10.5.5.8 | | | |
| 18 | Allocated P-TMSI | Mobile identity | O | TLV | 7 |
| | | 10.5.1.4 | | | |
| 23 | MS identity | Mobile identity | O | TLV | 7-10 |
| | | 10.5.1.4 | | | |
| 26 | List of Receive N-PDU Numbers | Receive N-PDU Number list | O | TLV | 4-19 |
| | | 10.5.5.11 | | | |
| 17 | Negotiated READY timer value | GPRS Timer | O | TV | 2 |
| | | 10.5.7.3 | | | |
| 25 | GMM cause | GMM cause | O | TV | 2 |
| | | 10.5.5.14 | | | |
| 2A | T3302 value | GPRS Timer 2 | O | TLV | 3 |
| | | 10.5.7.4 | | | |
| 8C | Cell Notification | Cell Notification | O | T | 1 |
| | | 10.5.5.21 | | | |
| 4A | Equivalent PLMNs | PLMN List | O | TLV | 5-47 |
| | | 10.5.1.13 | | | |
| 32 | PDP context status | PDP context status | O | TLV | 4 |
| | | 10.5.7.1 | | | |
| B- | Network feature support | Network feature support | O | TV | 1 |
| | | 10.5.5.23 | | | |
| 34 | Emergency Number List | Emergency Number List | O | TLV | 5-50 |
| | | 10.5.3.13 | | | |
| 35 | MBMS context status | MBMS context status | O | TLV | 2 - 18 |
| | | 10.5.7.6 | | | |
| A- | Requested MS Information | Requested MS Information | O | TV | 1 |
| | | 10.5.5.25 | | | |
| 37 | T3319 value | GPRS Timer 2 | O | TLV | 3 |
| | | 10.5.7.4 | | | |

In accordance with one example of the invention, parameters "Network feature support", "Emergency Number List", "MBMS context status", "Requested MS Information", and "T3319 value" are added.

For MME the Tracking Area Update procedure and the alternative Attach procedure will work in an analogues way.

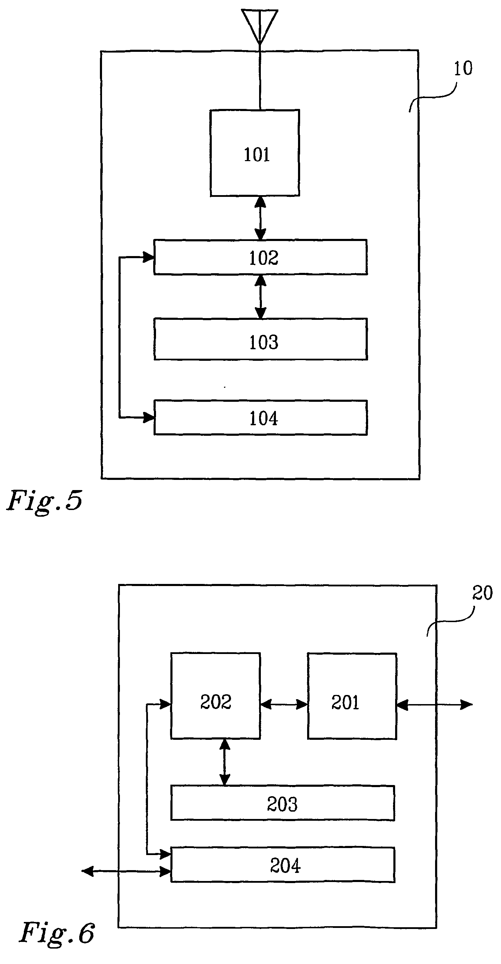

An exemplary general UE 10 is a very schematically illustrated in Fig. 5. The UE 10 comprises a transceiver portion 101, a processing unit 102, memory unit 103 and a user interface 104. The user interface 104 interacts with the user of the device and may comprise display drivers (not shown) and receiver input from a keyboard or special function keys (not shown). The processing unit 102 is configured to execute instructions stored in the memory unit 103 for controlling the operations of the UE. A user may enter an emergency number (e.g. 112) or use a special dedicated key to dial an emergency call. The processing unit using the transceiver portion 101 puts the emergency call through the communications network to which the UE is connected to. If the UE is moving between several RAs, the UE generates and transmits a request message for roaming from the first BS it is connected to the second (new) BS. The request message comprises an indication of an emergency call. The transceiver portion 101 receives an acceptance signal for changing from the first BS to the second BS. The acceptance signal, as mentioned earlier, comprises data relating to the emergency call. The UE then transmits an acknowledgment message indicating completed roaming.

An exemplary arrangement 20 for use in a BS according to the present invention is very schematically illustrated in Fig. 6. The arrangement 20 comprises a transmitter and receiver portion 201, a processor 202, memory 203, and communication interface 204. The communication interface 204 processes communication with other network devices. The processing unit 202 is configured to execute instructions stored in the memory unit 203 for controlling the operations of the arrangement 20.

The arrangement receives a request message from a UE for roaming from a first BS to a second BS through the receiver portion 201. The request message comprises the indication of an emergency call. The processor 202 generates and transmits an acceptance signal comprises data relating to the emergency call of changing from the first BS to the second BS. Then arrangement receives an acknowledgment message indicating completed roaming of the UE. The arrangement may be implemented in SGSN part of the network.

Further modifications of the invention within the scope of the claims would be apparent to a skilled person. UE may comprise any of a cell phone, PDA, a computer, modem card, etc, enabled to communicate with a communications network.

The present invention may be implemented as software in a computational unit in the UE and in the core network or as part of an ASIC (application specific integrated circuit) in the core network and UE.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented at least in part by means of both hardware and software, and that several "means", "units" or "devices" may be represented by the same item of hardware.

Moreover, it should be appreciated by a skilled person that the invention is not limited to the exemplary network types mentioned and described. It may be implemented in any wireless communication networks supporting the similar signaling as described earlier.

The above mentioned and described embodiments are only given as examples and should not be limiting to the present invention. Other solutions, uses, objectives, and functions within the scope of the appended claims.

## Claims

1. A method in a communications network for handling a signaling relating to prioritized calls from a User Equipment. UE, (10) roaming between a first (50a, 750a) and a second (50b, 750b) Base Station, BS, whereon the prioritized call is transferred to said second BS when roaming and said prioritized call is transmitted from said UE (10) and received by said second BS, the method being **characterized by** the steps of:
a. receiving by said second BS a roaming request message from said UE comprising an indication of a prioritized call, said request message being one of Routing Area Update, RAU, or Tracking Area Update, TAU request,
b. transmitting by said UE an acceptance signal of roaming from said first BS (50a, 750a) to said second BS (50b, 750b), said acceptance signal comprising data relating to said prioritized call including update result set to a new value comprising data for emergency attachment, and
c. receiving an acknowledgment message indicating completed roaming of said UE.

2. The method of claim 1, wherein said prioritized call is an emergency call.

3. The method of claim 2, wherein said first BS comprises a first Serving GPRS Support Node, SGSN, from which said UE roams to the second BS comprising a second SGSN,

4. The method of claim 2, wherein said first BS comprises a first mobility management entity, MME, from which said UE roams to the second BS comprising a second MME.

5. The method according to claim 3 or 4, wherein in said step b. said second SGSN/MME responds to said UE with Routing Area Update Accept including said update result set to a new value comprising data for emergency attachment.

6. The method of claim 3 or 4, wherein said request message Is an Attach Request.

7. The method of claim 6, wherein said first SGSN/MME responds with Context Response with the MM and PDP contexts/EPS bearer including a data for emergency indication.

8. The method according to claim 7, wherein in said step b. said second SGSN/MME responds to said UE with Attach Accept.

9. The method according to claim 8, wherein said Attach accept includes Attach result set to a new value for emergency RAU/TAU.

10. A method in a communications network for handling signaling relating to prioritized calls transmitted from a User Equipment, UE (10), roaming between a first (50a, 750a) and a second (50b, 750b) Base Station, BS, the method being **characterised by** the steps of:
a. transmitting a request message for roaming from said UE to said second BS comprising an indication of a prioritized call, said request message being one of Routing Area Update, RAU, or Tracking Area Update, TAU, request
b. receiving an acceptance signal of roaming from said first BS to said second BS by said UE, comprising data relating to said prioritized call including update result set to a new value comprising data for emergency attachment, and
c. transmitting an acknowledgment message by said UE indicating completed roaming,

11. A User Equipment, UE, (10) comprising a transceiver portion (101) and means for putting prioritized calls through a communications network, **characterized in that** said UE (10) is configured to generate and transmit a request message for roaming from a first Base Station, BS, (50a, 750a) to a second BS (50b, 750b), said request message comprising an indication of a prioritized call, said request message being one of Routing Area Update, RAU, or Tracking Area Update, TAU, request, said transceiver is configured to receive an acceptance signal of roaming from said first BS to said second BS, said acceptance signal comprising data relating to said prioritized call including update result set to a new value comprising data for emergency attachment, and said UE being further configured to transmit an acknowledgment message indicating completed roaming.

12. An infrastructure element (20) in a communication network adapted to the handle prioritized calls, said element comprising a transmitter (201) and receiver portion (201), **characterized In that** said element (20) is configured to receive a request message from a User Equipment, UE, (10) for roaming from a first Base Station, BS, (50a, 750a) to second BS, (50b, 750b) said request massage comprising an indication of a prioritized call, said request message being one of Routing Area Update, RAU, or Tracking Area Update, TAU, request and said element comprising a processing means (202) for generating and transmitting an acceptance signal of roaming from said first BS to said second BS, said acceptance signal comprising data relating to said prioritized call comprising update result set to a new value comprising data for emergency attachment, and said element further being configured to receive an acknowledgment message indicating completed roaming of said UE,

## Patentansprüche

1. Verfahren in einem Kommunikationsnetz zum Handhaben einer Signalisierung, die priorisierte Rufe eines Benutzergeräts, UE, (10) betrifft, das zwischen einer ersten (50a, 750a) und einer zweiten (50b, 750b) Basisstation, BS, roamt, worauf der priorisierte Ruf beim Roaming auf die zweite BS umgelegt wird und der priorisierte Ruf vom UE (10) übertragen wird und von der zweiten BS empfangen wird, wobei das Verfahren durch die folgenden Schritte gekennzeichnet ist:
a. Empfangen einer eine Anzeige eines priorisierten Rufs umfassenden Roaming-Anforderungsnachricht vom UE durch die zweite BS, wobei die Anforderungsnachricht eine von Folgenden ist: eine RAU(Routingbereichsaktualisierung)- oder eine TAU(Trackingbereichsaktualisierung)-Anforderung,
b. Übertragen eines Roaming-Annahmesignals von der ersten BS (50a, 750a) an die zweite BS (50b, 750b) durch das UE, wobei das Annahmesignal den priorisierten Ruf betreffende Daten einschließlich eines Aktualisierungsergebnisses umfasst, das auf einen neuen Wert eingestellt ist, der Daten für einen Notfallanschluss umfasst, und
c. Empfangen einer ACK-Nachricht, die beendetes Roaming des UE anzeigt.

2. Verfahren nach Anspruch 1, worin der priorisierte Ruf ein Notruf ist.

3. Verfahren nach Anspruch 2, worin die erste BS einen ersten Serving-GRPS-Unterstützungsknoten, SGSN, umfasst, von dem aus das UE zur einen zweiten SGSN umfassenden zweiten BS roamt.

4. Verfahren nach Anspruch 2, worin die erste BS eine erste Mobilitätsmanagemententität, MME, umfasst, von der aus das UE zur eine zweite MME umfassenden zweiten BS roamt.

5. Verfahren nach Anspruch 3 oder 4, worin im Schritt b. der zweite SGSN/MME auf das UE mit einer Routingbereichs-Aktualisierungsannahme einschließend das Aktualisierungsergebnis reagiert, das auf einen neuen Wert eingestellt ist, der Daten für einen Notfallanschluss umfasst.

6. Verfahren nach Anspruch 3 oder 4, worin die Anforderungsnachricht eine Anschlussanforderung ist.

7. Verfahren nach Anspruch 6, worin der erste SGSN/MME mit einer Kontext-Antwort reagiert, wobei die MM- und PDP(Paketdatenprotokoll)-Kontexte/EPS(entwickeltes Paketsystem)-Träger Daten zur Notfallanzeige einschließen.

8. Verfahren nach Anspruch 7, worin in Schritt b. der zweite SGSN/MME auf das UE mit Anschlussannahme reagiert.

9. Verfahren nach Anspruch 8, worin die Anschlussannahme ein auf einen neuen Wert für Notfall-RAU/TAU eingestelltes Anschlussergebnis einschließt.

10. Verfahren in einem Kommunikationsnetz zum Handhaben einer Signalisierung, die priorisierte Rufe betrifft, die von einem Benutzergerät, UE, (10) übertragen werden, das zwischen einer ersten (50a, 750a) und einer zweiten (50b, 750b) Basisstation, BS, roamt, wobei das Verfahren durch die folgenden Schritte gekennzeichnet ist:
a. Übertragen einer eine Anzeige eines priorisierten Rufs umfassenden Roaming-Anforderungsnachricht vom UE an die zweite BS, wobei die Anforderungsnachricht eine von Folgenden ist: eine RAU(Routingbereichsaktualisierung)- oder eine TAU(Trackingbereichsaktualisierung)-Anforderung,
b. Empfangen eines Roaming-Annahmesignals von der ersten BS an die zweite BS durch das UE, Daten umfassend, die den priorisierten Ruf einschließlich eines Aktualisierungsergebnisses betreffen, das auf einen neuen Wert eingestellt ist, der Daten für einen Notfallanschluss umfasst, und
c. Übertragen einer ACK-Nachricht vom UE, die beendetes Roaming anzeigt.

11. Benutzergerät, UE, (10), einen Transceiver-Teil (101) und Mittel umfassend, um priorisierte Rufe durch ein Kommunikationsnetz zu leiten, **dadurch gekennzeichnet, dass** das UE (10) dazu konfiguriert ist, eine Roaming-Anforderungsnachricht zu erzeugen und von einer ersten Basisstation, BS, (50a, 750a) an eine zweite BS (50b, 750b) zu übertragen, wobei die Anforderungsnachricht eine Anzeige eines priorisierten Rufs umfasst, wobei die Anforderungsnachricht eine von Folgenden ist: eine RAU(Routingbereichsaktualisierung)- oder eine TAU(Trackingbereichsaktualisierung)-Anforderung, wobei der Transceiver dazu konfiguriert ist, ein Roaming-Annahmesignal von der ersten BS an die zweite BS zu empfangen, das Annahmesignal den priorisierten Ruf betreffende Daten einschließlich eines Aktualisierungsergebnisses umfasst, das auf einen neuen Wert eingestellt ist, der Daten für einen Notfallanschluss umfasst, und das UE außerdem dazu konfiguriert ist, eine ACK-Nachricht zu übertragen, die beendetes Roaming anzeigt.

12. Infrastrukturelement (20) in einem Kommunikationsnetz, angepasst zum Handhaben von priorisierten Rufen, wobei das Element einen Sender- (201) und Empfängerteil (201) umfasst, **dadurch gekennzeichnet, dass** das Element (20) dazu konfiguriert ist, eine Roaming-Anforderungsnachricht von einem Benutzergerät, UE, (10) von einer ersten Basisstation BS (50a, 750a) an eine zweite BS (50b, 750b) zu empfangen, wobei die Anforderungsnachricht eine Anzeige eines priorisierten Rufs umfasst, wobei die Anforderungsnachricht eine von Folgenden ist: eine RAU(Routingbereichsaktualisierung)- oder eine TAU(Trackingbereichsaktualisierung)-Anforderung und das Element ein Verarbeitungsmittel (202) zum Erzeugen und Übertragen eines Roaming-Annahmesignals von der ersten BS an die zweite BS umfasst, wobei das Annahmesignal den priorisierten Ruf betreffende Daten umfasst, die ein Aktualisierungsergebnis umfassen, das auf einen neuen Wert eingestellt ist, der Daten für einen Notfallanschluss umfasst, und das Element außerdem dazu konfiguriert ist, eine ACK-Nachricht zu empfangen, die beendetes Roaming des UE anzeigt.

## Revendications

1. Procédé mis en oeuvre dans un réseau de communication en vue de gérer une signalisation relative à des appels prioritaires provenant d'un équipement d'utilisateur, UE, (10), en itinérance entre une première station de base (50a, 750a) et une seconde station de base (50b, 750b), BS, suite à laquelle l'appel prioritaire est transféré à ladite seconde station de base lors de l'itinérance et ledit appel prioritaire est transmis à partir dudit équipement UE (10) et reçu par ladite seconde station de base, le procédé étant **caractérisé par** les étapes ci-dessous consistant à :
a. recevoir, par le biais de ladite seconde station BS, un message de demande d'itinérance provenant dudit équipement UE, comprenant une indication d'un appel prioritaire, ledit message de demande étant l'une parmi une demande de mise à jour de zone de routage, RAU, ou une demande de mise à jour de zone de suivi, TAU ;
b. transmettre, par le biais dudit équipement UE, un signal d'acceptation d'itinérance de ladite première station BS (50a, 750a) à ladite seconde station BS (50b, 750b), ledit signal d'acceptation comprenant des données relatives audit appel prioritaire incluant un résultat de mise à jour défini sur une nouvelle valeur comprenant des données de rattachement d'urgence ; et
c. recevoir un message d'accusé de réception indiquant l'itinérance terminée dudit équipement UE.

2. Procédé selon la revendication 1, dans lequel ledit appel prioritaire est un appel d'urgence.

3. Procédé selon la revendication 2, dans lequel ladite première station BS comporte un premier noeud de support GPRS de service, SGSN, à partir duquel ledit équipement UE est en itinérance vers la seconde station BS comprenant un second noeud SGSN.

4. Procédé selon la revendication 2, dans lequel ladite première station BS comprend une première entité de gestion de la mobilité, MME, à partir de laquelle ledit équipement UE est en itinérance vers la seconde station BS comprenant une seconde entité MME.

5. Procédé selon la revendication 3 ou 4, dans lequel, à ladite étape b., ledit second noeud SGSN / ladite seconde MME répond audit équipement UE par un message d'acceptation de mise à jour de zone de routage comprenant ledit résultat de mise à jour défini sur une nouvelle valeur comprenant des données de rattachement d'urgence.

6. Procédé selon la revendication 3 ou 4, dans lequel ledit message de demande est une demande de rattachement.

7. Procédé selon la revendication 6, dans lequel ledit premier noeud SGSN / ladite première entité MME répond par un message de réponse de contexte avec les contextes MM et PDP / la porteuse EPS incluant des données d'indication d'urgence.

8. Procédé selon la revendication 7, dans lequel, à ladite étape b., ledit second noeud SGSN / ladite seconde entité MME répond audit équipement UE par une acceptation de rattachement.

9. Procédé selon la revendication 8, dans lequel ladite acceptation de rattachement inclut un résultat de rattachement défini sur une nouvelle valeur pour une mise à jour RAU / TAU d'urgence.

10. Procédé mis en oeuvre dans un réseau de communication destiné à gérer une signalisation relative à des appels prioritaires transmis à partir d'un équipement d'utilisateur, UE, (10) en itinérance entre une première station de base (50a, 750a) et une seconde station de base (50b, 750b), BS, le procédé étant **caractérisé par** les étapes ci-dessous consistant à :
a. transmettre un message de demande d'itinérance, dudit équipement UE à ladite seconde station BS, comprenant une indication d'un appel prioritaire, ledit message de demande étant l'une d'une demande de mise à jour de zone de routage, RAU, ou d'une demande de mise à jour de zone de suivi, TAU ;
b. recevoir un signal d'acceptation d'itinérance de ladite première station BS à ladite seconde station BS, par le biais dudit équipement UE, comprenant des données relatives audit appel prioritaire incluant un résultat de mise à jour défini sur une nouvelle valeur comprenant des données de rattachement d'urgence ; et
c. transmettre un message d'accusé de réception, par le biais dudit équipement UE, indiquant l'itinérance terminée.

11. Équipement d'utilisateur, UE, (10) comprenant une partie d'émetteur-récepteur (101) et des moyens pour placer des appels prioritaires à travers un réseau de communication, **caractérisé en ce que** ledit équipement UE (10) est configuré de manière à générer et à transmettre un message de demande d'itinérance d'une première station de base, BS, (50a, 750a) à une seconde station BS (50b, 750b), ledit message de demande comprenant une indication d'un appel prioritaire, ledit message de demande étant l'une d'une demande de mise à jour de zone de routage, RAU, ou d'une demande de mise à jour de zone de suivi, TAU, ledit émetteur-récepteur étant configuré de manière à recevoir un signal d'acceptation d'itinérance de ladite première station BS à ladite seconde station BS, ledit signal d'acceptation comprenant des données relatives audit appel prioritaire incluant un résultat de mise à jour défini sur une nouvelle valeur comprenant des données de rattachement d'urgence, et ledit équipement UE étant en outre configuré de manière à transmettre un message d'accusé de réception indiquant l'itinérance terminée.

12. Élément d'infrastructure (20) dans un réseau de communication apte à gérer des appels prioritaires, ledit élément comprenant une partie d'émetteur (201) et de récepteur (201), **caractérisé en ce que** ledit élément (20) est configuré de manière à recevoir un message de demande à partir d'un équipement d'utilisateur, UE, (10), pour l'itinérance d'une première station de base, BS, (50a, 750a) vers une seconde station BS, (50b, 750b), ledit message de demande comprenant une indication d'un appel prioritaire, ledit message de demande étant l'une d'une demande de mise à jour de zone de routage, RAU, ou d'une demande de mise à jour de zone de suivi, TAU, et ledit élément comprenant des moyens de traitement (202) pour générer et transmettre un signal d'acceptation d'itinérance de ladite première station BS vers ladite seconde station BS, ledit signal d'acceptation comprenant des données relatives audit appel prioritaire incluant un résultat de mise à jour défini sur une nouvelle valeur comprenant des données de rattachement d'urgence, et ledit élément étant en outre configuré de manière à recevoir un message d'accusé de réception indiquant l'itinérance terminée dudit équipement UE.
